# EUROPEAN PATENT SPECIFICATION

(11) **EP 0 718 073 B1**
(45) Date of publication and mention of the grant of the patent: **28.11.2001**
(21) Application number: 95309308.5
(22) Date of filing: 20.12.1995
(51) Int. Cl.: B23P 19/02, B21D 39/20, F16L 55/162, F28F 11/02

(54) **System and method for sleeving a heat transfer tube belonging to a nuclear heat exchanger**
Vorrichtung und Verfahren zum Einbringen einer Hülse in einem Wärmeübertragungsrohr eines Nuklear-Wärmeaustauschers
Dispositif et procédé pour manchonner un tube de transfert de chaleur, d'un échangeur de chaleur nucléaire

(30) Priority: 23.12.1994 US 363663
(43) Date of publication of application: 26.06.1996
(73) Proprietor: Westinghouse Electric Company LLC, Monroeville, PA 15146-2866 (US)
(72) Inventor: Evans, David M., Madison, PA 15663 (US); Olivera, Pedro C., Monroeville, PA 15146 (US)
(74) Representative: van Berlyn, Ronald Gilbert

(56) References cited:
- EP-A- 0 102 188
- EP-A- 0 177 045
- EP-A- 0 462 530
- EP-A- 0 626 232
- EP-A- 0 666 125
- FR-A- 2 666 408
- US-A- 4 783 890
- US-A- 4 941 512
- US-A- 5 301 424

## Description

### BACKGROUND OF THE INVENTION

This invention generally relates to sleeving of tubular members and more particularly relates to a system and method for sleeving a heat transfer tube belonging to a nuclear heat exchanger, the tube having an obstruction therein in the form of a previously installed sleeve.

Occasionally, nuclear heat exchanger or steam generator tubes may degrade and thus may not remain leaktight. Such degradation may occur, for example, at the elevation of the tubesheet or at the higher elevations of tube support plates. In any event, if through-wall cracking occurs due to the degradation, the radioactive primary fluid may leak through the crack and commingle with the nonradioactive secondary fluid, a highly undesirable result.

However, the tube, although degraded, may remain in service by sleeving the degraded portion of the tube. When sleeving is performed, a tubular repair sleeve is inserted into the tube to cover the degraded portion of the tube. The sleeve is then secured to the tube by radially expanding the sleeve into intimate engagement with the inner wall of the tube, such that the degraded portion of the tube is spanned or covered. The sleeve is then welded or hard-rolled to complete the tube-to-sleeve seal. In this manner, the radioactive primary fluid is prevented from commingling with the non-radioactive secondary fluid even though the wall of the tube is degraded.

Prior art sleeves are inserted into the tube and expanded typically by means of a hydraulic expansion mandrel. However, such prior art sleeves are relatively long in length (e.g., 305 cm (12 inches) or longer) and experience an amount of elastic "spring-back" away from the inside wall of the tube after the hydraulic expansion process is completed such that the pressure boundary of the steam generator tube is compromised although the tube has been "sleeved". Moreover, prior art sleeves are expanded so that the outside diameter of the tube is enlarged or bulged at selected locations in the wall of the tube as the sleeve is expanded in order that the sleeve is suitably affixed to the tube. However, enlargement of the tube outside diameter may cause undesirable stress in the "transition zone" of the expanded region of the tube which may in turn lead to further stress corrosion cracking of the tube. Such stress corrosion cracking may also compromise the pressure boundary of the steam generator tube. Therefore, a problem in the art is to sleeve a steam generator tube without enlarging the outside diameter of the tube and to sleeve the tube in such a manner that elastic "spring-back" is not experienced by the sleeve.

In addition, the heat transfer tube may further degrade at an elevation higher than the elevation where such a prior art sleeve has been previously installed. That is, the heat transfer tube may degrade at the elevation of any one of the tube support plates, which are at an elevation higher than the tubesheet. However, the previously installed first prior art sleeve, whether it be located at the elevation of the tubesheet or the support plate, will present an obstacle to the free passage of a second prior art sleeve due to the smallest inside diameter of the installed first sleeve being smaller that the outside diameter of the second sleeve. Thus, a tube requiring sleeving at an elevation higher than the elevation of the previously installed tubesheet or support plate sleeve cannot be readily sleeved due to the obstruction created by the initially installed sleeve. When this occurs, the tube is typically plugged by means of a suitable tube plug, thereby removing the tube from service. Removing the heat transfer tube from service decreases the thermal efficiency of the steam generator, thereby lessening the economic desirability of operating the steam generator. Therefore, another problem in the art is to suitably sleeve a steam generator tube at an elevation higher than the elevation of a previously installed prior art sleeve.

Apparatus and methods for sleeving steam generator tubes by expanding sleeves into engagement with the interior wall of the steam generator tube are known. One such apparatus and method is disclosed in U.S. Patent 4,783,890 issued November 15, 1988 in the name of Jean-Paul Gaudin titled "Method of Repairing A Steam Generator Tube By Means of Lining". This patent discloses a liner that is introduced into a nuclear steam generator tube, the liner being affixed to the tube by mechanical deformation of an end part of the liner. The plastic deformation of the liner causes elastic expansion of the tube, which thereafter contracts to grip the end part of the liner. However, this patent does not disclose a suitable system and method for sleeving a heat transfer tube without enlarging the outside diameter of the tube and also does not disclose a system and method to suitably sleeve a steam generator tube at an elevation higher than the elevation of a previously installed prior art sleeve.

Prior art document EP-A-0626232 discloses another method of sleeving a heat transfer tube belonging to a nuclear heat exchanger, but the method does not enable the tube to be sleeved without enlarging the outside diameter of the tube.

Therefore, what is needed and what is addressed by the present invention, is a method for suitably sleeving a heat transfer tube belonging to a nuclear heat exchanger, the tube having an obstruction therein in the form of a previously installed sleeve.

The invention consists in a method of sleeving a heat transfer tube belonging to a nuclear heat exchanger, the tube having an outside diameter and a first sleeve disposed therein, the first sleeve having an inside diameter, the method comprising the steps of:
(a) inserting an elongate support body into the tube, the support body having a resilient bladder there-surrounding and a tubular second sleeve surrounding the bladder, the sleeve having a predetermined length and a predetermined outside diameter less than the inside diameter of the first sleeve for admitting the second sleeve past the first sleeve;
(b) radially expanding the second sleeve by expanding the bladder; and
(c) pressurizing the bladder to expand the bladder by operating a pressurizer in communication with the bladder;
   and characterized in that:
   the second sleeve has a circumferential thickness when inserted into the tube with the bladder and then is plastically expanded beyond the inside diameter of the first sleeve and into intimate engagement with the tube over the entire length of the sleeve without enlarging the outside diameter of the tube.

An object of the present invention is to provide a system and method of sleeving a heat transfer tube belonging to a nuclear heat exchanger, the tube having a previously installed first sleeve therein obstructing the passage of a second sleeve to an elevation in the tube higher than the first sleeve.

A feature of the present invention is the provision of a second sleeve having a predetermined length and an outside diameter smaller than the inside diameter of the installed first sleeve for admitting the second sleeve past the installed first sleeve.

Another feature of the present invention is the provision of a support body having a resilient bladder theresurrounding for expanding the second sleeve along its entire length (i.e., full length) and for creating greater engagement with the tube inside diametral surface.

Another feature of the present invention is the provision of a pressurizer for pressurizing the bladder, so that the sleeve expands along its entire length and into intimate engagement with the tube to sleeve the tube without enlarging the outside diameter of the tube.

An advantage of the present invention is that the sleeve will not experience elastic "spring-back" away from the inside wall of the tube as the sleeve is expanded along its entire length, so that the pressure boundary of the steam generator tube is not compromised.

Another advantage of the present invention is that the steam generator tube may now be sleeved at an elevation higher than the elevation of a previously installed prior art sleeve.

Yet another advantage of the present invention is that not only can the sleeve of the present invention be installed at an elevation higher than the prior art sleeve, but also the sleeve can be installed above a previously installed sleeve belonging to the invention.

These and other objects, features and advantages of the present invention will become apparent to those skilled in the art upon a reading of the following detailed description when taken in conjunction with the drawings wherein there is shown and described illustrative embodiments of the invention.

While the specification concludes with claims particularly pointing out and distinctly claiming the subject matter of the invention, it is believed the invention will be better understood from the following description taken in conjunction with the accompanying drawings wherein:
Figure 1 is a perspective view in partial vertical section of a typical nuclear steam generator with parts removed for clarity, the steam generator having a plurality of inverted U-shaped heat transfer tubes disposed therein;
Figure 2 is a view in elevation of part of the steam generator showing the use of the method of the invention in operation to sleeve a selected one of the tubes;
Figure 3 is a view in elevation of a support body and a surrounding sleeve disposed in the tube;
Figure 4 is a view in elevation of the selected tube showing a previously installed prior art first sleeve therein and a second sleeve provided according to the invention intimately engaging the tube at an elevation higher than the elevation of the prior art first sleeve;
   and
Figure 5 shows a graph illustrating the change in pressure acting on the sleeve as a function of time as the sleeve is expanded into engagement with the tube without expanding the tube.

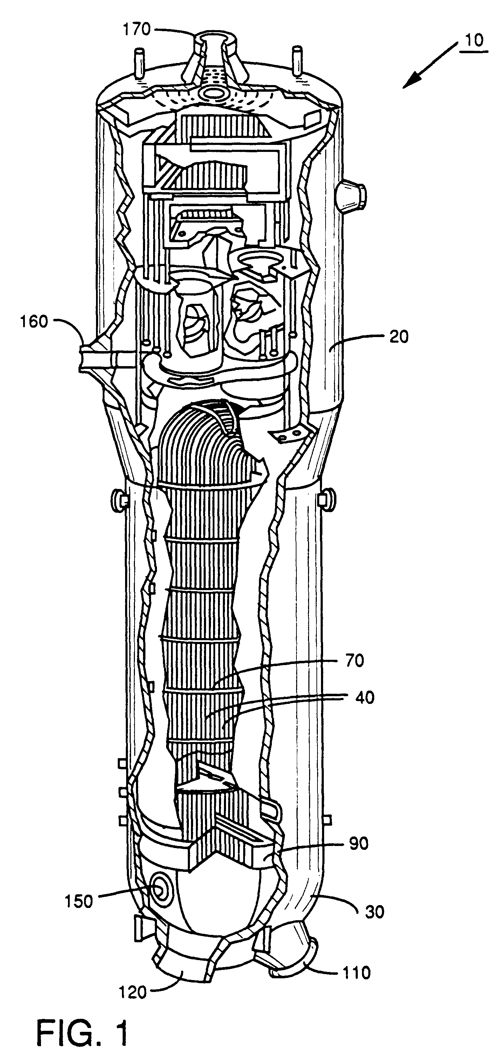

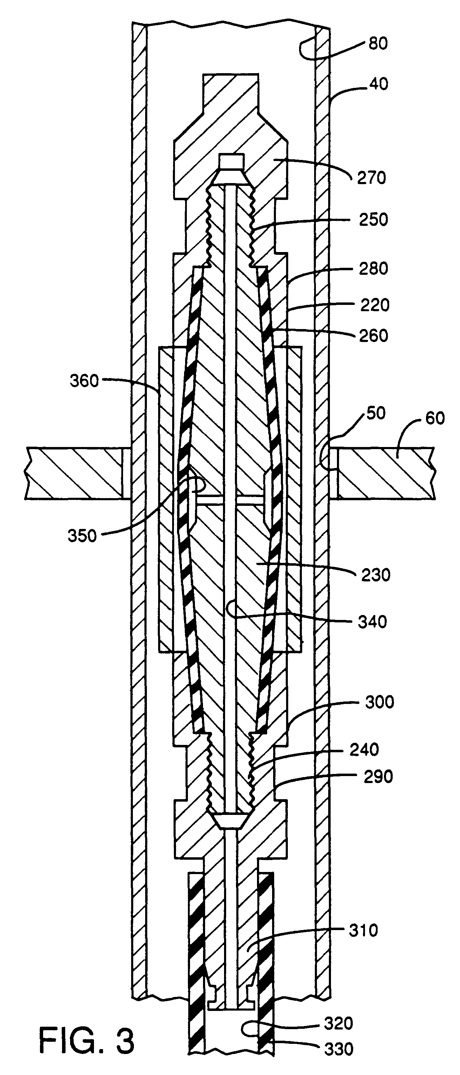

Referring to Fig. 1, there is shown typical nuclear steam generator or heat exchanger, generally referred to as 10, for generating steam. Steam generator 10 comprises a shell 20 having a hemispherically-shaped lower portion 30. Disposed in shell 20 are a plurality of vertical inverted U-shaped heat transfer tubes 40 that extend through respective ones of a plurality of holes 50 (see Fig. 3) formed through each of a plurality of tube support plates 70. Each tube 40 has an inside surface 80 (see Fig. 3). As shown in Fig. 1, disposed in lower portion 30 below support plates 70 is a horizontal tubesheet 90 having holes 100 therethrough for receiving the end portions of respective ones of tubes 40. Attached to shell 20 are a first inlet nozzle 110 and a first outlet nozzle 120 in fluid communication with an inlet plenum chamber 130 and with an outlet plenum chamber 140, respectively. First inlet nozzle 110 allows entry of a radioactive primary fluid into inlet plenum chamber 130, which primary fluid flows from inlet plenum chamber 130, through tubes 40 and into outlet plenum chamber 140, whereupon the primary fluid exits steam generator through outlet nozzle 120. A plurality of manway holes (only one of which is shown) are formed through shell 20 below tubesheet 90 for allowing access to inlet plenum chamber 130 and outlet plenum chamber 140. Moreover, attached to shell 20 above tubesheet 90 is a second inlet nozzle 160 for entry of a nonradioactive secondary fluid into shell 20. A second outlet nozzle 170 is attached to the top of shell 20 for exit of steam from steam generator 10.

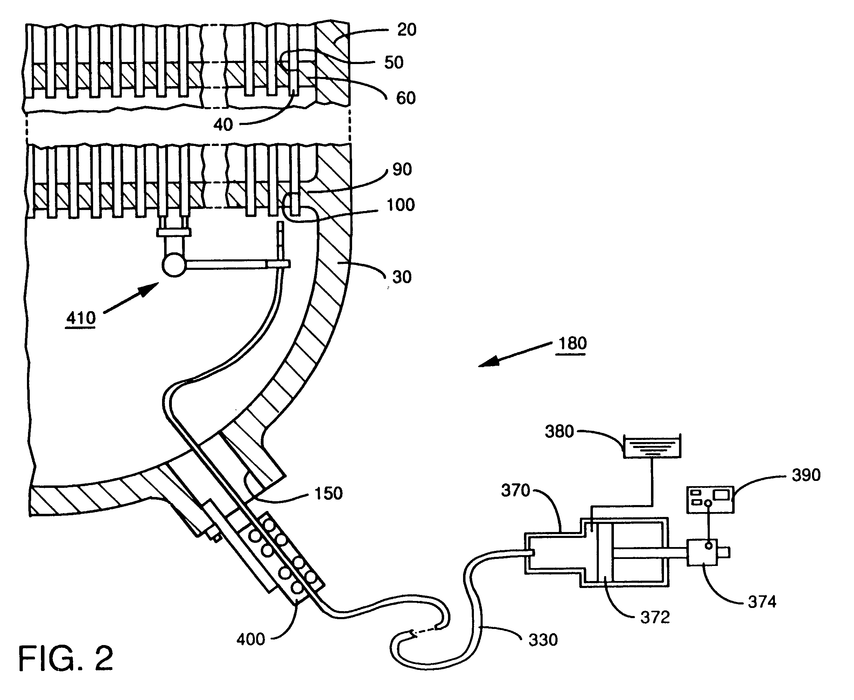

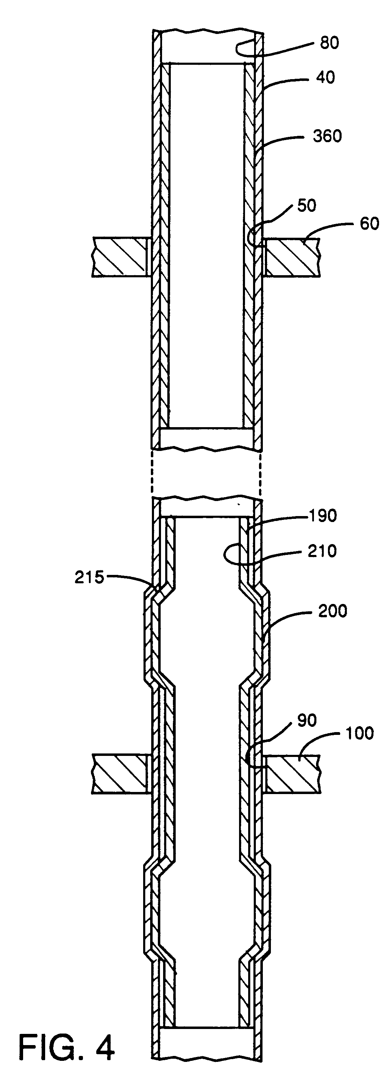

Referring to Figs. 2, 3 and 4, there is shown the system of the invention, generally referred to as 180, in operative condition to sleeve a selected one of tubes 40. As best seen in Fig. 4, such a tube 40 may have a previously installed prior art first sleeve 190 secured therein by expanded portions 200, first sleeve 190 having a bore 210 therethrough and an hydraulically expanded expansion "transition zone" 215. System 180 comprises an elongate mandrel or support body 220, which is insertable into tube 40 and sized to pass through bore 210. Support body 220 includes an elongate main body portion 230 having an exterior surface thereon and having an externally threaded proximal end portion 240 and an externally threaded distal end portion 250. Of course, it will be understood with reference to the several figures that "proximal end portion" means that end portion nearer manway holes 150 and "distal end portion" means that end portion further away from manway holes 150.

Referring again to Figs. 2, 3 and 4, surrounding main body 230 is a resilient bladder 260 for reasons disclosed hereinbelow. Threadably connected to distal end portion 250 of main body 230 is a first end cap 270 having an annular cup-shaped first flange 280 for securing, such as by a press-fit, the distal end portion of bladder 260 between the distal end portion 240 of main body 230 and flange 280 of first end cap 270. Moreover, threadably connected to proximal end portion 240 of main body 230 is a second end cap 290 having an annular cup-shaped second flange 300 for securing, such as by a press-fit, the proximal end portion of bladder 260 between proximal end portion 240 of main body 230 and flange 300 of second end cap 290. Second end cap 290 has an extended portion 310 thereof for intimately engaging an inner wall 320 of a flexible conduit 330. Extending through extended portion 310, through second end cap 290 and through main body 230 is a fluid flow channel 340 for reasons disclosed hereinbelow. Flow channel 340 terminates in a port 350 on the exterior surface of main body 230, port 350 being covered by bladder 260 as bladder 260 surrounds main body 230.

As best seen in Figs. 3 and 4, surrounding bladder 260 is an elongate sleeve 360 having a predetermined length. Sleeve 360 also has a predetermined outside diameter less than the smallest diameter of the prior art sleeve 190 for passing through bore 210 of prior art sleeve 190 on its way to sleeve tube 40 at an elevation therein higher than the elevation of prior art sleeve 190. As described more fully hereinbelow, sleeve 360 is capable of being expanded over its entire length.

Applicants have discovered that it is important that sleeve 360 be expandable over its entire length. This is important because such "full-length" sleeve expansion provides a tube-to-sleeve contact area that is relatively large compared to prior art sleeves. A large tube-to-sleeve contact area reduces the maximum required pressure to hold the sleeve in place in tube 40. Since the maximum pressure can be reduced, the outside diameter of tube 40 need not be radially enlarged after sleeve 360 is expanded into engagement with tube 40 in order to affix sleeve 360 to tube 40. Avoiding enlargement of the outside diameter of tube 40 is desirable because enlargement of the outside diameter of tube 40 causes unwanted stress in the transition zone of the expansion region, which unwanted stress would otherwise lead to stress corrosion cracking. Moreover, it is important that support body 220 be elongate. This is important because such a full-length or elongate support body 220 allows expansion of sleeve 360 without producing the tapered transition zones 215 such as is experienced at the end portions of prior art sleeves 190. The removal of the tapered transition zones allows a newly installed sleeve 360 to be located at any location in tube 40 due to this capability, regardless of the number of sleeves previously installed.

Returning to Fig. 2, conduit 330 is connected to a pressurizer 370 for supplying a pressurized fluid (e.g., air, water, oil, or the like) through conduit 330 and to channel 340 for radially expanding bladder 260. Pressurizer 370 may include a piston arrangement 372 connected to a drive motor 374 for driving piston arrangement 372, so that the fluid is suitably pressurized and depressurized as needed. A fluid reservoir 380 is in fluid communication with pressurizer for supplying fluid to and for withdrawing fluid from pressurizer 370. A controller is connected to motor 374, which is in turn connected to piston arrangement 372 of pressurizer 370, for controllably operating piston arrangement 372 and thus for controlling pressurizer 370. Controlling pressurizer 370 controllably pressurizes and depressurizes the fluid in conduit 330 in order to controllably pressurize and depressurize bladder 260. In addition, a translation mechanism, such as a conduit driver 400, which may be connected to manway hole 150, engages conduit 330 for translating conduit 330, support body 220 and sleeve 360 axially in tube 40 and through bore 210 of prior art sleeve 190. Moreover, an alignment mechanism, generally referred to as 410, may be disposed in lower portion 30 of steam generator 10 and engaged with support body 220 for coaxially aligning support body 220 with tube 40. In this regard, alignment mechanism 410 may be a ROSA (Remotely Operated Service Arm) robotic device available from the Westinghouse Electric Corporation, located in Pittsburgh, Pennsylvania.

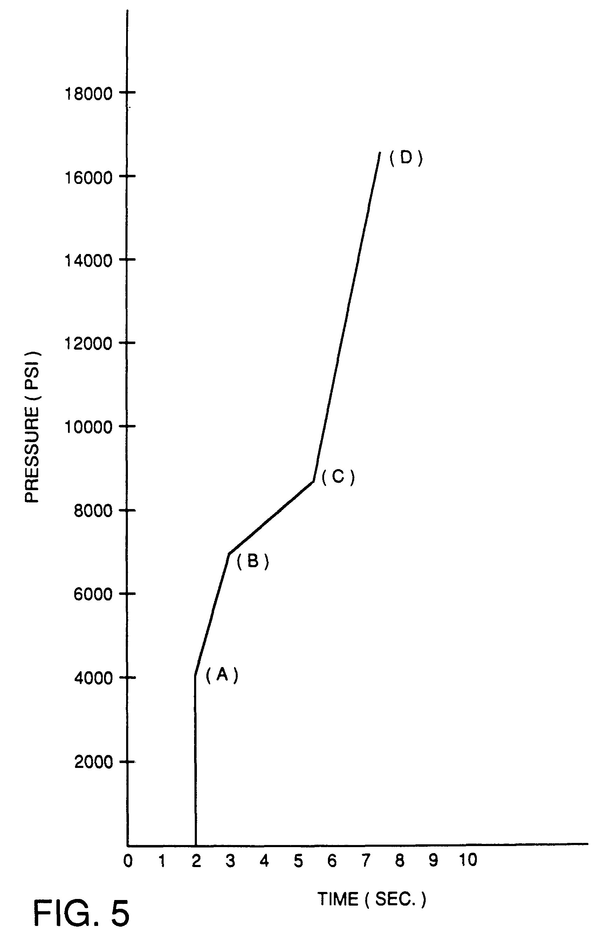

Turning now to Fig. 5, there is shown a graph illustrating the change in pressure acting on sleeve 360 as a function of time as sleeve 360 is expanded into engagement with tube 40 substantially over the entire length of sleeve 360. As shown in Fig. 5, the fluid is pressurized to expand bladder 260 to increase the pressure acting on sleeve 360 until sleeve 360 begins to expand elastically from point "A" (approximately 27579 KPa (4,000 psia)) to point "B" (approximately 44816KPa (6,500 psia)), which represents the yield point of the sleeve material. Past point "B", sleeve 360 will deform plastically and contact inside surface 80 of tube 40 at point "C"(approximately 62053 KPa (9,000 psia)). Past point "C", bladder 260 will continue to expand sleeve 360 until a predetermined pressure is reached at point "D" (approximately 113074 KPa (16,400 psia)). However, tube 40 is not allowed to radially expand. In this manner, sleeve 360 is quickly expanded the desired amount in less than approximately 10 seconds. Moreover, it will be appreciated from Fig. 5 that sleeve 360 is plastically deformed to a point where there is no elastic return which would otherwise allow sleeve 360 to "draw-back" away from tube 40 after expansion of sleeve 360.

By way of example only and not by way of limitation, tube 40 may have a nominal inside diameter of 19.69 mm (0.775 inch. Prior art sleeve 190, which may have a length of approximately 305 mm (12 inches) or greater, may have an inside diameter, at its most constricted point, of approximately 16.79 mm (0.661 inch). The sleeve 360 of the invention, which may have a length of 305 mm (12 inches) or less, may have an outside diameter of approximately 0.640 inch and an inside diameter of approximately 14.33 mm (0.564 inch) in its unexpanded state. Sleeve 360 may be an "INCONEL" metal alloy composed substantially of nickel, chromium, iron and a trace amount of cobalt. In its full-length expanded state, sleeve 360 may have an outside diameter of approximately 19.69 mm (0.775 inch) for matingly engaging the inside diameter 80 of tube 40.

It will be appreciated from the description hereinabove, that an advantage of the present invention is that expansion of sleeve 360 will not enlarge the outside diameter of tube 40 and will not lead to elastic "springback" of sleeve 360. Another advantage of the present invention is that sleeve 360 is sized to pass through bore 210 of previously installed prior art sleeve 190, or through the bore of a previously installed sleeve 360, so that sleeve 360 may be affixed to tube 40 at an elevation higher than the elevation of previously installed prior art sleeve 190 or sleeve 360.

Although the invention is illustrated and described herein in its preferred embodiment, it is not intended that the invention as illustrated and described be limited to the details shown, because various modifications may be obtained within the scope of the claims. For example, a suitable eddy current coil may be integrally attached to support body 220 for locating the site of tube 40 to be sleeved by sleeve 360.

## Claims

1. A method of sleeving a heat transfer tube (40) belonging to a nuclear heat exchanger (10), the tube (40) having an outside diameter and a first sleeve (190) disposed therein, the first sleeve (190) having an inside diameter, the method comprising the steps of:
(a) inserting an elongate support body (270) into the tube (40), the support body (270) having a resilient bladder (260) there-surrounding and a tubular second sleeve (360) surrounding the bladder (260), the sleeve (360) having a predetermined length and a predetermined outside diameter less than the inside diameter of the first sleeve (190) for admitting the second sleeve (360) past the first sleeve (190);
(b) radially expanding the second sleeve (360) by expanding the bladder (260); and
(c) pressurizing the bladder (360) to expand the bladder (260) by operating a pressurizer (370) in communication with the bladder (260);
and **characterized in that**:
the second sleeve (360) has a circumferential thickness when inserted into the tube (40) with the bladder and then is plastically expanded beyond the inside diameter of the first sleeve (190) and into intimate engagement with the tube (40) over the entire length of the sleeve without enlarging the outside diameter of the tube (40).

2. The method of Claim 1, wherein the second sleeve is plastically expanded at a hydraulic pressure of from 6,500 psi (44815 KPa) to 16,400 psi (113074 KPa).

3. The method of Claim 2, wherein the second sleeve is plastically expanded at a hydraulic pressure of no more than 16,400 psi (113074 KPa).

4. The method of claim 1, further comprising the step of coaxially aligning the support body (220) with the tube (40) by operating an alignment mechanism (410) connected to the support body (220).

5. The method of claim 1, further comprising the step of translating the support body (220) axially in the tube (40) past the first sleeve (190) by operating a translation mechanism (400) connected to the support body (220).

## Patentansprüche

1. Verfahren zum Umhüllen eines Wärmeübertragungsrohrs (40) eines Nuklear-Wärmetauschers (10), bei dem das Rohr (40) einen Außendurchmesser und eine erste. darin angeordnete Hülse hat, bei dem die erste Hülse (190) einen Innendurchmesser hat, in dem das Verfahren die folgenden Schritte aufweist:
(a) Einschieben eines langgestreckten Stützkörpers (270) in das Rohr (40), wobei der Stützkörper (270) eine elastische Blase (260) hat, die ihn umgibt, und eine rohrformige zweite Hülse (360), die die Blase (260) umgibt, wobei die Hülse (360) eine vorbestimmte Länge und einen vorbestimmten Außendurchmesser geringer als den Innendurchmesser der ersten Hülse (190) hat, um die zweite Hülse (360) an der ersten Hülse (190) vorbeizubringen;
(b) radiales Expandieren der zweiten Hülse (360) durch Expandieren der Blase (260); und
(c) die Blase (360) unter Druck zu setzen, um die Blase (260) durch Betreiben eines Druckhalters (370) in Verbindung mit der Blase (260) zu expandieren;
und **dadurch gekennzeichnet, dass**:
die zweite Hülse (360) eine periphere Dicke hat, wenn sie in das Rohr (40) mit der Blase eingeschoben wird, und dann plastisch über den Innendurchmesser der ersten Hülse (190) hinaus expandiert wird und in engen Eingriff mit dem Rohr (40) über die ganze Länge der Hülse gebracht wird, ohne den Außendurchmesser des Rohrs (40) zu vergrößern.

2. Verfahren nach Anspruch 1, in dem die zweite Hülse plastisch mit einem Hydraulikdruck von 6500 psi (44815 Kpa) bis auf 16400 psi (113074 Kpa) expandiert wird.

3. Verfahren nach Anspruch 2, in dem die zweite Hülse plastisch mit einem Hydraulikdruck von nicht höher als 16400 psi (113074 Kpa) expandiert wird.

4. Verfahren nach Anspruch 1, das weiterhin den Schritt aufweist, den Stützkörper (220) mit dem Rohr (40) koaxial auszurichten, indem ein Ausrichtungsmechanismus (410) betrieben wird, der an dem Stützkörper (220) angeschlossen ist.

5. Verfahren nach Anspruch 1, das weiterhin den Schritt aufweist, den Stützkörper (220) axial in dem Rohr (40) an der ersten Hülse (190) vorbei zu versetzen, indem ein Versetzungsmechanismus (400) betrieben wird, der an dem Stützkörper (220) angeschlossen ist.

## Revendications

1. Procédé pour manchonner un tube de transfert de chaleur (40) appartenant à un échangeur de chaleur nucléaire (10), le tube (40) ayant un certain diamètre extérieur et comportant un premier manchon (190) disposé à l'intérieur de celui-ci, le premier manchon (190) ayant un certain diamètre intérieur, le procédé comprenant les étapes suivantes :
(a) l'insertion d'un corps de support allongé (270) à l'intérieur du tube (40), le corps de support (270) comportant une vessie élastique (260) en relation d'entourage et un deuxième manchon tubulaire (360) entourant la vessie (260), le manchon (360) ayant une longueur prédéterminée et un diamètre extérieur prédéterminé inférieur au diamètre intérieur du premier manchon (190) pour admettre le deuxième manchon (360) au-delà du premier manchon (190) ;
(b) la dilatation radiale du deuxième manchon (360) par dilatation de la vessie (260) ; et
(c) la mise sous pression de la vessie (260) de façon à dilater la vessie (260) en actionnant un compresseur (370) en communication avec la vessie (260) ;
et **caractérisé en ce que** :
le deuxième manchon (360) a une certaine épaisseur circonférentielle lorsqu'il est inséré à l'intérieur du tube (40) avec la vessie, après quoi il est dilaté plastiquement au-delà du diamètre intérieur du premier manchon (190) et en engagement intime avec le tube (40) sur toute la longueur du manchon sans agrandir le diamètre extérieur du tube (40).

2. Procédé selon la revendication 1, dans lequel le deuxième manchon est dilaté plastiquement sous une pression hydraulique comprise entre 44 815 kPa (6 500 livres par pouce carré) et 113 074 kPa (16 400 livres par pouce carré).

3. Procédé selon la revendication 1, dans lequel le deuxième manchon est dilaté plastiquement sous une pression hydraulique qui n'est pas supérieure à 113 074 kPa (16 400 livres par pouce carré).

4. Procédé selon la revendication 1, comprenant de plus l'étape consistant à aligner coaxialement le corps de support (220) avec le tube (40) en actionnant un mécanisme d'alignement (410) relié au corps de support (220).

5. Procédé selon la revendication 1, comprenant de plus l'étape consistant à faire effectuer une translation axiale au corps de support (220) dans le tube (40) au-delà du premier manchon (190) en actionnant un mécanisme de translation (400) relié au corps de support (220).
